# EUROPÄISCHE PATENTSCHRIFT

(11) **EP 2 133 271 B1**
(45) Veröffentlichungstag und Bekanntmachung des Hinweises auf die Patenterteilung: **17.08.2011**
(21) Anmeldenummer: 08010474.8
(22) Anmeldetag: 09.06.2008
(51) Int. Cl.: B65B 5/08, B65B 35/40, B65G 57/03

(54) **Vorrichtung und Verfahren zur Übergabe von Packgut an ein Packguttransportsystem oder an eine Speichervorrichtung**
Device and procedure for transferring packaged items to a packaged item transport system or a storage device
Dispositif et procédé de transmission de marchandises sur un système de transport de marchandises ou sur un dispositif de stockage

(43) Veröffentlichungstag der Anmeldung: 16.12.2009
(73) Patentinhaber: Uhlmann Pac-Systeme GmbH & Co. KG, 88471 Laupheim (DE)
(72) Erfinder: Hähnel, Bernd, 76297 Stutensee (DE); Arb, Rudi, 88471 Laupheim (DE); Huchler, Joachim, 88484 Gutenzell (DE)
(74) Vertreter: Wächter, Jochen

(56) Entgegenhaltungen:
- EP-A- 1 602 584
- WO-A-00/68086
- DE-A1- 1 561 941
- GB-A- 942 187
- US-A- 4 864 801
- US-A- 5 123 321

## Beschreibung

Die vorliegende Erfindung betrifft eine Vorrichtung und ein Verfahren zur Übergabe von Packgut an ein Packguttransportsystem oder an eine Speichervorrichtung gemäß dem Oberbegriff der Ansprüche 1 und 14, wie Sie aus der DE 1 561 941 bekannt sind.

Derartige Vorrichtungen dienen beispielsweise zur Übergabe von Blistern an eine Transportkette eines Kartonierers. Im Gebiet der Blisterübergabe ist aus der EP 1 602 584 A1 eine Vorrichtung bekannt, bei der die einzelnen Blister mittels eines Saugbandes parallel zur Bewegungsrichtung des Packguttransportsystems vereinzelt herangeführt werden und in einem Kassettenmodul einer Übergabeeinheit stapelweise abgelegt werden. Das Kassettenmodul ist wiederum synchron zum Packguttransportsystem bewegbar, wobei während der parallelen Bewegung die Blisterstapel mittels Schiebern in die einzelnen Aufnahmen des Packguttransportsystems eingeschoben werden. Anschließend fährt das Kassettenmodul wieder zur Ausgangsstellung zurück, wo es erneut durch das Saugband mit Blistern befüllt wird. Der Durchsatz einer solchen Vorrichtung ist jedoch in bestimmten Fällen zu gering.

Aus der GB 942 187 ist eine Vorrichtung bekannt, bei der flache Artikel in unterschiedlichen Abständen auf einem Förderband in mehreren Reihen auf eine Anordnung zu bewegt werden, welche die Geschwindigkeit einer jeden Reihe regelt, so dass die Artikel anschließend in gleichmäßigen Abständen herauskommen. Die anschließende Fördereinheit dreht sich daraufhin gekrümmt nach unten und die Artikel werden auf stufenförmigen Absätzen nach unten bewegt und an weitere Fördereinrichtungen abgegeben. An jeder Stufe befinden sich dabei Schieber, die die Artikel in die Mitte schieben.

Die DE 1 561 941 offenbart eine Vorrichtung zur Zuführung von gruppierten und in mindestens zwei Schichten übereinander gelagerten Verpackungsgegenständen zu einem Einlassförderband einer Verpackungsmaschine. Die das Einlassförderband speisenden Förderbänder sind dabei im Wesentlichen horizontal und in verschiedenen Höhen parallel angeordnet. Seitlich wirkende Schieber schieben am Ende der Förderbänder Gruppen von Verpackungsgegenständen auf das Einlassförderband.

Aus der US 6,092,979 ist eine Vorrichtung zur Übergabe von Blistern an eine bewegte Blistertransportkette gezeigt, bei der die Blister in zwei parallelen Linien auf zwei getrennten Förderbändern transportiert werden. Eine Aufnahmeeinheit nimmt dabei die zunächst in parallelen Reihen angeordneten Blister auf und bildet auf jedem Transportband einen Stapel von zwei übereinanderliegenden Blistern, wobei die einzelnen Stapel beabstandet zueinander angeordnet sind und die Stapel eines Förderbandes versetzt zu den Stapeln des anderen Förderbandes angeordnet sind. Schließlich werden die Blisterstapel mittels eines Schiebers quer zur Transportrichtung der Förderbänder zu einer Linie zusammengeschoben, sodass eine Reihe von eng aufeinanderfolgenden Blisterstapeln auf einem Transportband weiterbefördert wird. Bei einer solchen Vorrichtung ist der Durchsatz relativ hoch, allerdings unterliegt die Vorrichtung erheblichen Einschränkungen hinsichtlich der Weiterbearbeitung der Blisterstapel, da sie lediglich in Förderrichtung der beiden Transportbänder weiterbefördert werden können. Schließlich nimmt eine solche Vorrichtung auch relativ viel Platz ein.

Eine ähnliche Vorrichtung ist aus der WO 00/68086 bekannt, welche den nächstkommenden Stand der Technik bildet. Hier werden einzelne Blister, welche in parallelen Reihen angeordnet sind, von einer Aufnahmeeinheit wiederum versetzt zueinander auf zwei Transportbändern abgelegt. Die Transportbänder arbeiten dabei getaktet, und die Blister werden aus ihren Kassetten in Richtung einer zwischen den beiden Transportbändern befindlichen Transportvorrichtung ausgeschoben, wodurch eine Linie mit eng aneinander liegenden Blistern auf dieser Transportvorrichtung erzeugt wird. Der Durchsatz der Vorrichtung ist hoch, allerdings ist auch hier lediglich eine Weiterförderung der Blister in Transportrichtung der Förderbänder möglich und die Vorrichtung benötigt relativ viel Platz.

Es ist daher die Aufgabe der vorliegenden Erfindung, eine Vorrichtung zur Übergabe von Packgut an ein bewegtes Packguttransportsystem oder an eine Speichervorrichtung zu schaffen, die einen hohen Durchsatz besitzt, gleichzeitig wenig Platz einnimmt und mit nahezu jeder beliebigen im Anschluss daran angeordneten Vorrichtung zum Weitertransport der Blister kombinierbar ist.

Diese Aufgabe wird durch die Merkmale des Anspruchs 1 gelöst.

Erfindungsgemäß weist die Vorrichtung zur Übergabe von Packgut an ein Packguttransportsystem oder an eine Speichervorrichtung eine Zuführeinheit zum Aufnehmen und Fördern von mehreren Packgutstücken auf, wobei die Zuführeinheit geeignet ist, die Packgutstücke am Ende der Förderstrecke der Zuführeinheit in mindestens drei parallelen Linien, aber zwischen den einzelnen Linien versetzt zueinander bereitzustellen, sowie mindestens einen Schieber zum Verschieben der von der Zuführeinheit bereitgestellten Packgutstücke. Die Vorrichtung weist außerdem eine stationäre Übergabestation auf, welche zur kurzfristigen Zwischenlagerung der Packgutstücke und zur Übergabe der Packgutstücke an ein Packguttransportsystem oder an eine Speichervorrichtung dient, wobei die Übergabestation mindestens drei parallele Ablagelinien mit Ablageflächen zur Aufnahme der von der Zuführeinheit bereitgestellten Packgutstücke aufweist, und wobei der Schieber im Bereich der Übergabestation angeordnet ist und zum Verschieben der dort in den mindestens drei parallelen Ablagelinien versetzt zueinander angeordneten Packgutstücken zu einer Ablagelinie dient.

Damit wird eine stationäre Zwischenlagerung geschaffen, welche einen hohen Durchsatz gewährleistet, gleichzeitig wenig Platz beansprucht und mit nahezu jeder beliebigen Art von Packguttransportsystem oder Speichervorrichtung, an die die Packgutstücke von der Übergabestation abgegeben werden, verwendet werden kann.

Stromaufwärts der Zuführeinheit ist vorzugsweise eine Ausgabevorrichtung vorgesehen, welche die Packgutstücke vereinzelt und in mindestens einer Reihe senkrecht zur Förderrichtung der Zuführeinheit bereitstellt. Damit wird eine simultane Befüllung der Zuführeinheit in hoher Taktung gewährleistet.

Vorzugsweise weist die Zuführeinheit mindestens ein umlaufendes Saugband mit mehren beabstandet zueinander angeordneten Saugpunkten auf. Ein solches Saugband ist insbesondere für Blister besonders geeignet und kann diese auf mechanisch einfache Weise fördern, wobei der Abstand der einzelnen Saugpunkte zueinander den Durchsatz des Saugbandes definiert.

Die Zuführeinheit weist vorzugsweise mehrere Sauggreifer zum Aufnehmen der Packgutstücke und zum Übergeben derselben an das mindestens eine Saugband auf. Somit ist eine gleichzeitige Aufnahme mehrerer Packgutstücke und eine sichere Übergabe an das Saugband gewährleistet.

Die Zuführeinheit umfasst mindestens drei Kombinationen aus jeweils einem Stopper und einem Abschläger, wobei jeweils eine Kombination einer Linie der Zuführeinheit zugeteilt ist, und wobei die jeweils aktiven Kombinationen verschiedener Linien in Förderrichtung der Zuführeinheit versetzt zueinander angeordnet sind. Damit wird eine versetzte Anordnung der Blister in Förderrichtung des Saugbandes zwischen den einzelnen Linien der Zuführeinheit gewährleistet, wobei die Stopper zum Festhalten der Blister dienen und die Abschläger die Blister von der Zuführeinheit lösen, woraufhin diese nach unten fallen. Auf diese Weise wird besonders einfach eine Entkopplung der zunächst in parallelen Reihen herangeführten Blister zu versetzt angeordneten Blistern möglich.

Um ein frühzeitiges Herunterfallen der Blister vom Saugband zu verhindern, weist die Zuführeinheit Saugbohrungen auf, welche die Blister so lange festhalten, bis alle versetzt zueinander angeordneten Kombinationen von Stopper und Abschläger mit einem Blister befüllt sind.

Vorzugsweise weist eine der Ablagelinien der Übergabestation tiefer liegende Ablageflächen auf als die anderen Ablagelinien, wobei die Ablagelinie mit den tiefer liegenden Ablageflächen die Ablagelinie für die zusammengeschobenen Packgutstücke bildet. Dadurch wird eine Stapelung der Packgutstücke in den tiefer liegenden Ablageflächen möglich, wodurch die Übergabestation einerseits als Zwischenspeicher dienen kann und andererseits bereits gestapelte Blister zur weiteren Bearbeitung abgegeben werden können.

Im Sinne einer sicheren und individuell programmierbaren Steuerung des Schiebevorgangs ist zum gesteuerten Antrieb des Schiebers ein Servomotor vorgesehen.

In einer bevorzugten Ausführungsform weisen in einer Ablagelinie der Übergabestation, welche die Linie für die zusammengeschobenen Packgutstücke bildet, die Ablageflächen zu öffnende Klappen auf. Damit wird es möglich, die Packgutstücke nach unten an eine sich anschließende Packguttransportvorrichtung oder an eine Speichervorrichtung abzugeben, was besonders Platz sparend ist und eine Vielzahl von Verwendungsmöglichkeiten gewährleistet.

Dabei sind vorzugsweise bei jeder Ablagefläche zwei Klappen vorgesehen, welche sich gegenläufig in Richtung der schmaleren Seite der Ablagefläche hin öffnen, wodurch ein sicheres Durchfallen der Packgutstücke nach unten ohne Verdrehung sichergestellt werden kann.

Im Sinne einer variablen Programmierbarkeit des Bewegungsvorgangs ist ein Servomotor vorgesehen, welcher zum gesteuerten Antrieb aller Klappen dient.

Es ist vorteilhaft, dass der Schieber derart gestaltet ist, dass er die Packgutstücke gleichzeitig von zwei Seiten in Richtung einer zentralen Ablagelinie verschiebt. Hierdurch kann der Verschiebevorgang der Packgutstücke vereinfacht und verkürzt werden.

Die Übergabestation weist im Bereich der Ablageflächen vorzugsweise schwenkbare Rückhalteelemente für die Packgutstücke auf, um ein Zurückspringen der auf die Ablageflächen gefallenen Packgutstücke zu verhindern. Dies ist insbesondere bei Blistern sinnvoll, welche durch ihr Eigengewicht die Rückhalteelemente zunächst zur Seite drehen und anschließend von den wieder in die Ausgangsstellung zurückgelangten Rückhalteelementen an einer Bewegung nach oben gehindert werden.

Ebenfalls erfindungsgemäß ist ein Verfahren zum Übergeben von Packgut an ein Packguttransportsystem oder an eine Speichervorrichtung gemäß Anspruch 14.

Weitere Einzelheiten, Merkmale und Vorteile der vorliegenden Erfindung ergeben sich aus der nachfolgenden detaillierten Beschreibung unter Bezugnahme auf die Zeichnungen.
- Fig. 1: zeigt eine Perspektivansicht einer bevorzugten Ausführungsform der erfin- dungsgemäßen Vorrichtung zur Übergabe von Packgut an ein Packgut- transportsystem oder an eine Speichervorrichtung;
- Fig. 2: zeigt eine Ansicht von unten einer als Saugband mit drei parallelen Linien ausgebildeten Zuführeinheit;
- Fig. 3: zeigt eine Draufsicht auf eine Übergabestation mit drei Ablagelinien, wobei die mittlere Ablagelinie Ablageflächen mit zu öffnenden Klappen aufweist;
- Fig. 4: zeigt die Übergabestation aus Fig. 3 nach dem Verschieben der Blister in die zentrale Ablagelinie; und

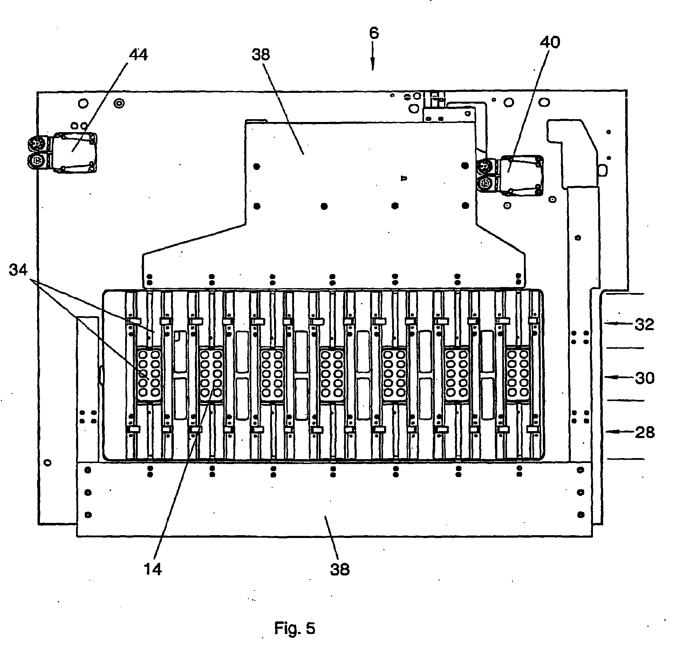

- Fig. 5: zeigt die Übergabestation auf Fig. 3 und 4 in einem Zustand unmittelbar vor der Aufnahme weiterer Blister in der Übergabestation.

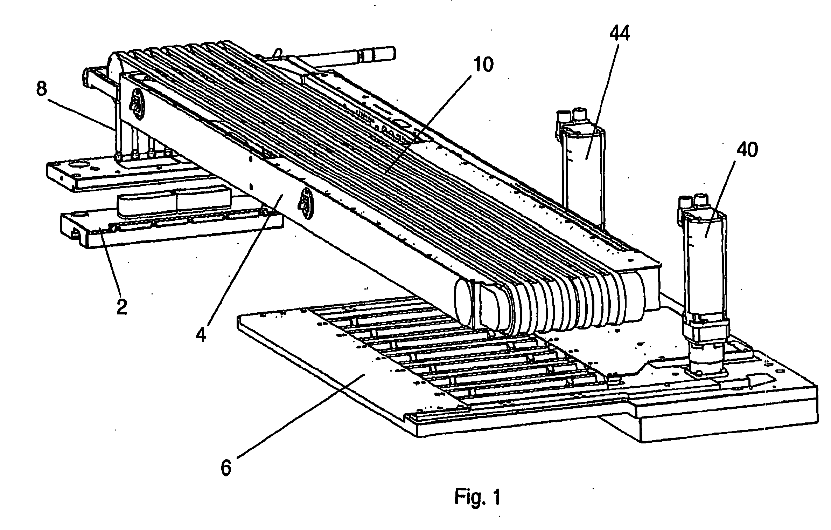

In Fig. 1 sind die Hauptkomponenten einer erfindungsgemäßen Vorrichtung zur Übergabe von Packgut an ein Packguttransportsystem oder an eine Speichervorrichtung dargestellt. Im vorliegenden Beispielsfall ist die Vorrichtung auf eine Übergabe von Blistern ausgelegt, die aus Blisterbögen ausgestanzt werden und durch die Ausgabevorrichtung 2 einer Stanze bereitgestellt werden. Von der Ausgabevorrichtung 2 bereitgestellte Blister werden über eine Zuführeinheit 4 zu einer Übergabestation 6 gefördert und auf dieser abgelegt.

Im dargestellten Beispielsfall umfasst die Zuführeinheit 4 mehrere Sauggreifer 8, welche zur Aufnahme der von der Stanze 2 bereitgestellten Blister dienen und diese nach oben in Richtung eines Saugbandes 10 bewegen. Das Saugband 10 besteht aus einer Mehrzahl parallel nebeneinander angeordneter Transportriemen 12, welche jeweils in einer Reihe quer zur Förderrichtung des Saugbandes 10 angeordnete Saugpunkte (nicht dargestellt) aufweisen, an denen die von den Sauggreifern 8 an das Saugband 10 gehobenen Blister in Reihe nebeneinander festgesaugt werden. Die Transportriemen 12 sind als umlaufende Riemen ausgebildet und bewegen sich mit konstanter Geschwindigkeit.

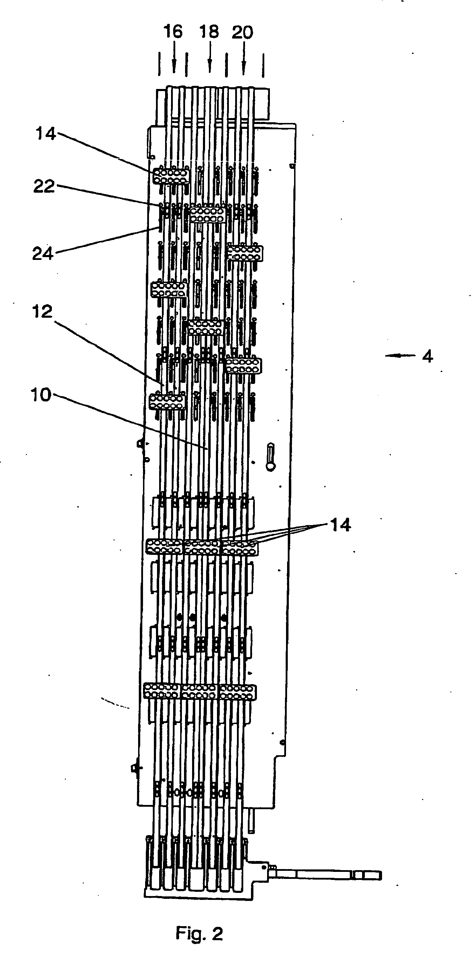

Wie aus Fig. 2 ersichtlich ist, hängen die Packgutstücke 14, hier Blister, mit ihren Näpfen nach unten an den Saugpunkten der Transportriemen 12 und bilden eine Reihe nebeneinander angeordneter Blister 14. Dabei können ein oder mehrere Transportriemen 12 eine Förderlinie 16, 18, 20 für den Transport jeweils eines Blisters 14 bilden, ebenso kann auch ein durchgängiges Saugband 10 gleichzeitig für den Transport der Blister 14 in mehreren Linien 16, 18, 20 sorgen. Im dargestellten Beispielsfall sind drei Linien 16, 18, 20 der Zuführeinheit 4 parallel zueinander angeordnet, es sind aber auch mehr als drei Linien möglich.

Weiter in Förderrichtung der Zuführeinheit 4 sind Stopper 22 und Abschläger 24 im Bereich des Saugbandes 10 angeordnet, um die durch das Saugband 10 geförderten Blister 14 am Weitertransport zu hindern und diese vom Saugband 10 nach unten abzuschlagen. Dabei sind die Stopper 22 und Abschläger 24 jeweils in Kombination in Reihen und Spalten in Form einer Matrix an verschiedenen Stellen des Saugbandes 10 verteilt. Erfindungsgemäß sind die "aktiven" Kombinationen von Stoppern 22 und Abschlägern 24 der einzelnen Linien 16, 18, 20 jeweils versetzt zueinander angeordnet, sodass die ursprünglich in einer Reihe nebeneinander durch das Saugband 10 geförderten Blister 14 in versetzt zueinander angeordneten Positionen von den Stoppern 22 angehalten werden. In einer Linie 16, 18, 20 sind vorzugsweise hintereinander mehrere Kombinationen von Stoppern 22 und Abschlägern 24 vorgesehen. Die Stopper 22 sind vorzugsweise mittels einer Steuerung hin- und herbeweglich ausgestaltet, um aus dem Förderweg der geförderten Blister 14 herausbefördert und wieder zurückbewegt werden zu können. Aufgrund der versetzten Anordnung der Kombinationen von "aktiven" Stoppern 22 und Abschlägern 24 in den verschiedenen Linien 16, 18, 20 werden die Blister 14 in den einzelnen Linien 16, 18, 20 zu unterschiedlichen Zeitpunkten am Stopper 22 anschlagen.

Da sich die Transportriemen 12 des Saugbandes 10 mit kontinuierlicher Geschwindigkeit weiterbewegen und somit die Saugpunkte des Saugbandes 10 den am ersten Stopper 22 anliegenden Blister 14 verlassen, wird dieser nicht mehr am Saugband 10 festgehalten und es ist notwendig, dass die Blister 14 anderweitig an einem frühzeitigen Hinabfallen gehindert werden. Hierzu weist die Zuführeinheit 4 vorzugsweise Saugbohrungen auf, die geeignet sind, die Blister 14 so lange festzuhalten, bis der jeweilige Abschläger 24 in Aktion tritt. Dies ist dann der Fall, wenn alle Kombinationen von Stopper 22 und Abschläger 24 mit Blistern 14 befüllt sind. Das Abschlagen erfolgt dann vorzugsweise gleichzeitig, und die Kombinationen aus Stoppern 22 und Abschlägern 24 sind wieder zur Aufnahme der nächsten Blister 14 bereit.

Wenn eine große Anzahl von Kombinationen von Stoppern 22 und Abschlägern 24 über einen längeren Abschnitt der Zuführeinheit 4 in einer Matrix angeordnet sind, wie es in Fig. 2 dargestellt ist, kann die Umstellung auf andere Formate bzw. eine andere Anzahl von Linien besonders einfach erfolgen. Ebenso kann auf einfache Weise eine Formatanpassung hinsichtlich der Blister 14 erfolgen.

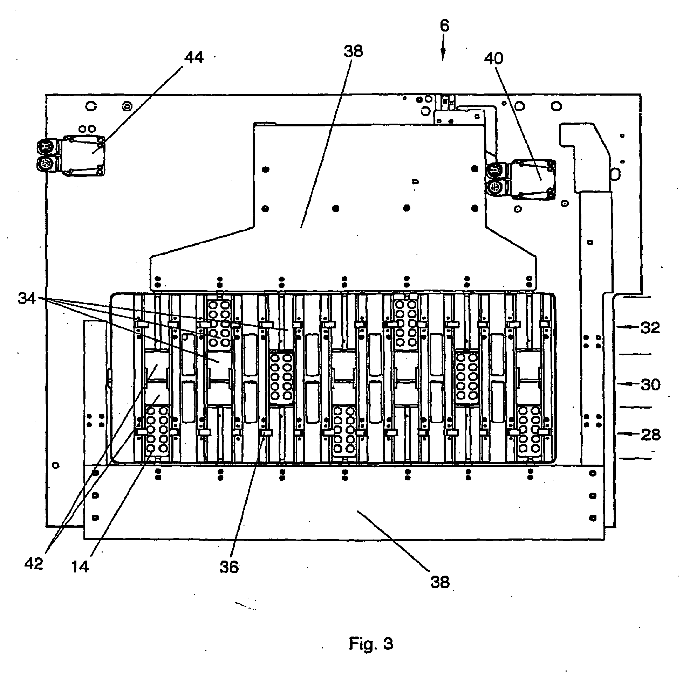

In Fig. 3 ist eine bevorzugte Ausführungsform einer stationären Übergabestation 6 gemäß der vorliegenden Erfindung dargestellt. Die Übergabestation 6 umfasst drei Ablagelinien 28, 30, 32, die der jeweiligen Anzahl von Linien 16, 18, 20 der Zuführeinheit 4 entsprechen und unterhalb der Zuführeinheit 4 angeordnet sind. Auch hier kann die Anzahl der Ablagelinien beliebig erhöht werden. Jede Ablagelinie 28, 30, 32 umfasst mehrere beabstandet zueinander angeordnete Ablageflächen 34 zur Aufnahme der von der Zuführeinheit 4 bereitgestellten und abgegebenen Blister 14. Jede Ablagefläche 34 entspricht im Wesentlichen der Form der Blister 14 und besitzt niedrige Umrandungen zur Fixierung der Lage der Blister 14. Im Falle der Übergabe von Blistern 14 sind vorzugsweise jeder Ablagefläche 34 an ihren längsseitigen Umrandungen zwei sich gegenüberliegende nach unten schwenkbare Rückhalteelemente 36 für die Blister 14 angeordnet. Diese Rückhalteelemente 36 werden vom auftreffenden Blister 14 aus dem Weg geschwenkt, stellen sich aufgrund einer Federkraft wieder in ihre Ausgangsstellung zurück und verhindern dann ein Zurückspringen des Blisters 14 nach oben. Alternativ zu den Rückhalteelementen kann auch gezielt Blasluft von oben eingesetzt werden.

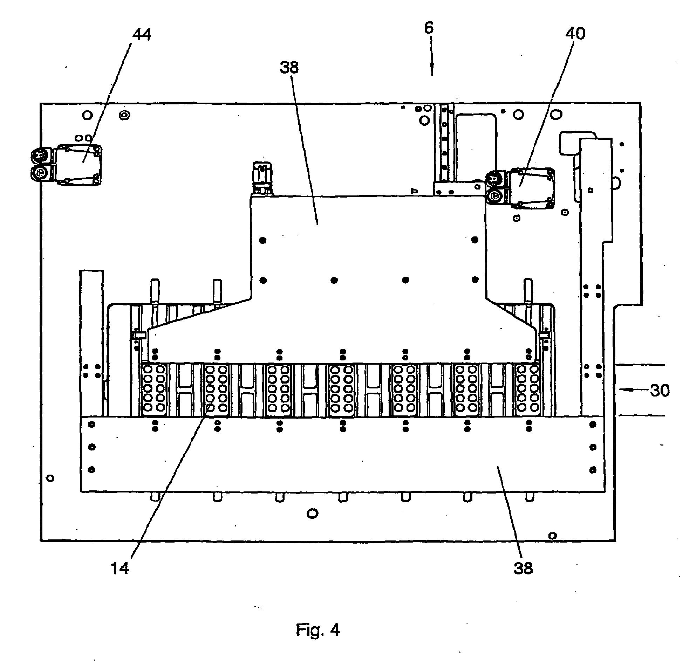

Eine der Ablagelinien, im dargestellten Beispielsfall die mittlere Ablagelinie 30, kann mit tiefer liegenden Ablageflächen 34 ausgestattet sein, um ein Stapeln von mehreren Blistern 14 übereinander in dieser Ablagelinie 30 zu gewährleisten. Diese Ablagelinie 30 kann somit auch als Zwischenspeicher dienen. Ein Schieber 38, welcher über einen Servomotor 40 angesteuert ist, schiebt nun die Blister 14 aus den verschiedenen Ablagelinien 28, 30, 32 zu einer Ablagelinie zusammen, im dargestellten Beispielsfall der mittleren Ablagelinie 30 (siehe Fig. 4). Hierzu ist der Schieber 38 derart ausgestaltet, dass er von beiden Seiten gleichmäßig die Blister 14 aus den äußeren beiden Ablagelinien 28 und 32 in Richtung der mittleren Ablagelinie 30 schiebt, bis diese auf den dortigen Ablageflächen 34 zu liegen kommen. Der Endzustand des Schiebevorgangs ist in Fig. 4 dargestellt.

Wie am besten aus Fig. 3 ersichtlich ist, besitzt eine Ablagelinie, im dargestellten Beispielsfall die mittlere Ablagelinie 30, Ablageflächen 34, welche zu öffnende Klappen 42 aufweisen. Im dargestellten Beispielsfall sind pro Ablagefläche 34 jeweils zwei Klappen 42 vorgesehen, die sich gegenläufig in Richtung der schmaleren Seiten der Ablagefläche 34 hin öffnen. Ein Servomotor 44 dient zum gesteuerten Antrieb der Klappen 42. Ebenso ist es denkbar, die Klappen 42 zur breiteren Seite der Ablagefläche 34 hin zu öffnen oder mindestens eine nach unten schwenkbare Klappe 42 pro Ablagefläche 34 vorzusehen. Das dargestellte Ausführungsbeispiel besitzt jedoch den Vorteil, dass ein Verdrehen der Blister 14 beim Hinabfallen sicher verhindert wird.

Die durch die geöffneten Klappen 42 fallenden Blister 14 werden entweder unmittelbar in einem Packguttransportsystem (nicht dargestellt) aufgenommen oder einer zwischengeschalteten Speichervorrichtung (ebenfalls nicht dargestellt) zugeführt.

Die erfindungsgemäße Vorrichtung zur Übergabe von Packgut an ein Packguttransportsystem oder an eine Speichervorrichtung arbeitet folgendermaßen. Zunächst werden die von der Ausgabevorrichtung 2 bereitgestellten Blister 14 durch die Sauggreifer 8 nach oben gehoben und an das Saugband 10 übergeben. Dort werden die parallelen Reihen von Blistern 14 so weit transportiert, bis ein Blister 14 in einer ersten Linie 16 an einem Stopper 22 anschlägt. Die übrigen Blister 14 in den anderen Linien 18, 20 werden durch die kontinuierlich laufenden Transportriemen 12 weiterbewegt, bis auch diese jeweils an zugehörigen Stoppern 22 anschlagen. Die Blister 14 werden dabei mittels Saugbohrungen in der Zuführeinheit 4 im Bereich der Stopper 22 festgehalten, bis alle gewünschten Abschlagpositionen mit Blistern 14 belegt sind und die Abschläger 24 die Blister vom Saugband 10 nach unten drücken. Die Blister 14 fallen nach unten und landen auf den Ablageflächen 34, welche dem Blisterformat entsprechen und in ebenso vielen Ablagelinien 28, 30, 32 angeordnet sind, wie Linien 16, 18, 20 in der Zuführeinheit 4 vorgesehen sind.

Im Anschluss daran werden die Blister 14 aus den Ablagelinien 28, 30, 32 auf eine Ablagelinie 30 verschoben, wo sie entweder unmittelbar durch Öffnen der Klappen 42 nach unten abgegeben werden oder auf eine weitere Lage von Blistern 14 warten, die auf der ersten Lage abgelegt wird. Nach dem Öffnen der Klappen 42 und der damit vorgenommenen Übergabe der Blister 14 oder der Blisterstapel an ein Packguttransportsystem oder an eine Speichervorrichtung kann der Zyklus wieder von vorne beginnen.

Es können verschiedenste Modifikationen des hier genannten Beispielfalls vorgenommen werden. Im dargestellten Beispielsfall werden Blister von der Vorrichtung übergeben, es können aber als Packgutstücke 14 ebenso andere pharmazeutische Produkte wie Vials, Ampullen, Flaschen, Schlauchbeutel etc. übergeben werden, wenn die Zuführeinheit 4 angepasst wird und mit entsprechenden Saug-/Greifvorrichtungen anstelle des Saugbandes arbeitet. Ebenso ist es möglich, die Packgutstücke 14 auf den Ablagelinien 28, 30, 32 lediglich von einer Seite aus zu verschieben, um eine Reihe von Packgutstücken in einer äußeren Ablagelinie 28 bzw. 32 zu erzeugen. In diesem Fall sind auch die Klappen 42 optional, da die in Reihe angeordneten Blister 14 mittels des Schiebers 38 an ein Packguttransportsystem oder an eine Speichervorrichtung übergeben werden könnten. Die Verschiebungsrichtung der Packgutstücke 14 auf den Ablagelinien 28, 30, 32 kann nicht nur, wie bislang dargestellt, in einer Richtung quer zur Förderrichtung der Zuführeinheit 4 erfolgen, sondern auch parallel hierzu. Dadurch würden die einzelnen Packgutstücke 14 nach dem Verschieben in einer Ablagelinie vorliegen, welche quer zur Förderrichtung der Zuführeinheit 4 orientiert ist. Wie bereits oben erläutert wurde, ist die Anzahl von Linien, in denen die Packgutstücke versetzt zueinander transportiert werden, optional, sofern mindestens drei Linien vorliegen. Je größer die Anzahl der Linien, desto höher ist der Durchsatz.

## Patentansprüche

1. Vorrichtung zur Übergabe von Packgut an ein Packguttransportsystem oder an eine Speichervorrichtung, mit
einer Zuführeinheit (4) zum Aufnehmen und Fördern von mehreren Packgutstücken (14), wobei die Zuführeinheit (4) geeignet ist, die Packgutstücke (14) am Ende der Förderstrecke der Zuführeinheit (4) in mindestens zwei parallelen Linien (16, 18, 20), aber zwischen den einzelnen Linien (16, 18, 20) versetzt zueinander bereitzustellen;
mindestens einem Schieber (38) zum Verschieben der von der Zuführeinheit (4) bereitgestellten Packgutstücke (14); und
einer stationären Übergabestation (6), welche zur kurzfristigen Zwischenlagerung der Packgutstücke (14) und zur Übergabe der Packgutstücke (14) an das Packguttransportsystem oder an die Speichervorrichtung dient, wobei die Übergabestation (6) parallele Ablagelinien (28, 30, 32) mit Ablageflächen (34) zur Aufnahme der von der Zuführeinheit (4) bereitgestellten Packgutstücke (14) aufweist, und wobei mindestens ein Schieber (38) im Bereich der Übergabestation (6) angeordnet ist und zum Verschieben der dort in den parallelen Ablagelinien (28, 30, 32) versetzt zueinander angeordneten Packgutstücke (14) zu einer Ablagelinie (30) dient,
**dadurch gekennzeichnet, dass**
die Zuführeinheit (4) geeignet ist, die Packgutstücke (14) in mindestens drei parallelen Linien (16, 18, 20) bereitzustellen, und die Übergabestation (6) mindestens drei parallele Ablagelinien (28, 30, 32) aufweist.

2. Vorrichtung nach Anspruch 1, **dadurch gekennzeichnet, dass** stromaufwärts der Zuführeinheit (4) eine Ausgabevorrichtung (2) vorgesehen ist, welche die Packgutstücke (14) vereinzelt und in mindestens einer Reihe senkrecht zur Förderrichtung der Zuführeinheit (4) bereitstellt.

3. Vorrichtung nach Anspruch 1 oder 2, **dadurch gekennzeichnet, dass** die Zuführeinheit (4) mindestens ein umlaufendes Saugband (10) mit mehreren beabstandet zueinander angeordneten Saugpunkten aufweist.

4. Vorrichtung nach Anspruch 3, **dadurch gekennzeichnet, dass** die Zuführeinheit (4) mehrere Sauggreifer (8) zum Aufnehmen der Packgutstücke (14) und zum Übergeben derselben an das mindestens eine Saugband (10) aufweist.

5. Vorrichtung nach Anspruch 3 oder 4, **dadurch gekennzeichnet, dass** die Zuführeinheit (4) mindestens drei Kombinationen aus jeweils einem Stopper (22) und einem Abschläger (24) aufweist, wobei jeweils eine Kombination einer Linie (16, 18, 20) zugeteilt ist und wobei die jeweils aktiven Kombinationen verschiedener Linien (16, 18, 20) in Förderrichtung der Zuführeinheit (4) versetzt zueinander angeordnet sind.

6. Vorrichtung nach Anspruch 5, **dadurch gekennzeichnet, dass** die Zuführeinheit (4) Saugbohrungen aufweist.

7. Vorrichtung nach einem der vorangehenden Ansprüche, **dadurch gekennzeichnet, dass** eine der Ablagelinien (30) der Übergabestation (6) tiefer liegende Ablageflächen (34) aufweist als die mindestens zwei Ablagelinien (28, 32), wobei die Ablagelinie (30) mit den tiefer liegenden Ablageflächen (34) die Ablagelinie (30) für die verschobenen Packgutstücke (14) bildet.

8. Vorrichtung nach einem der vorangehenden Ansprüche, **dadurch gekennzeichnet, dass** zum gesteuerten Antrieb des Schiebers (38) ein Servomotor (40) vorgesehen ist.

9. Vorrichtung nach einem der vorangehenden Ansprüche, **dadurch gekennzeichnet, dass** in einer Ablagelinie (30) der Übergabestation, welche die Ablagelinie (30) für die verschobenen Packgutstücke (14) bildet, die Ablageflächen (34) zu öffnende Klappen (42) aufweisen.

10. Vorrichtung nach Anspruch 9, **dadurch gekennzeichnet, dass** jede Ablagefläche (34) zwei Klappen (42) aufweist, welche sich gegenläufig in Richtung der schmaleren Seiten der Ablagefläche (34) hin öffnen.

11. Vorrichtung nach Anspruch 9 oder 10, **dadurch gekennzeichnet, dass** ein Servomotor (44) vorgesehen ist, welcher zum gesteuerten Antrieb aller Klappen (42) dient.

12. Vorrichtung nach einem der vorangehenden Ansprüche, **dadurch gekennzeichnet, dass** der Schieber (38) derart gestaltet ist, dass er die Packgutstücke (14) gleichzeitig von zwei Seiten in Richtung einer zentralen Ablagelinie (30) verschiebt.

13. Vorrichtung nach einem der vorangehenden Ansprüche, **dadurch gekennzeichnet, dass** die Übergabestation (6) im Bereich der Ablageflächen (34) schwenkbare Rückhalteelemente (36) für die Packgutstücke (14) aufweist.

14. Verfahren zum Übergeben von Packgut an ein Packguttransportsystem oder an eine Speichervorrichtung, mit folgenden Schritten:
- Aufnehmen und Fördern von mehreren Packgutstücken (14) mittels einer Zuführeinheit (4);
- Bereitstellen der Packgutstücke (14) durch die Zuführeinheit (4) in parallelen Linien (16, 18, 20), aber zwischen den einzelnen Linien (16, 18, 20) versetzt zueinander; und
- Abgeben der von der Zuführeinheit (4) bereitgestellten Packgutstücke (14) an eine stationäre Übergabestation (6) zur Bildung von parallelen Ablagelinien (28, 30, 32) versetzt zueinander angeordneter Packgutstücke (14);
- Verschieben der in der Übergabestation (6) in den parallelen Ablagelinien (28, 30, 32) versetzt zueinander angeordneten Packgutstücke (14) zu einer Ablagelinie (30) mittels eines Schiebers;
**dadurch gekennzeichnet, dass**
die Zuführeinheit (4) die Packgutstücke (14) in mindestens drei parallelen Linien (16, 18, 20) bereitstellt und die Übergabestation (6) mindestens drei parallele Ablagelinien (28, 30, 32) aufweist.

## Claims

1. Device for transferring packaged items to a packaged item transport system or to a storage device, comprising a feed unit (4) for receiving and conveying a plurality of packaged items (14), the feed unit (4) being adapted to provide the packaged items (14) at the end of the conveying path of the feed unit (4) in at least two parallel lines (16, 18, 20), but mutually offset in the individual lines (16, 18, 20); at least one pusher (38) for displacing the packaged goods (14) provided by the feed unit (4); and a stationary transfer station (6) for short-term intermediate storage of the packaged items (14) and for transferring the packaged items (14) to the packaged item transport system or to the storage device, the transfer station (6) comprising parallel deposit lines (28, 30, 32) having deposit surfaces (34) for receiving the packaged items (14) provided by the feed unit (4), and at least one pusher (38) being arranged in the region of the transfer station (6) and displacing the packaged items (14), which are arranged there mutually offset in the parallel deposit lines (28, 30, 32), in the direction of a deposit line (30), **characterised in that** the feed unit (4) is adapted for providing the packaged items (14) in at least three parallel lines (16, 18, 20) and the transfer station (6) comprises at least three parallel deposit lines (28, 30, 32).

2. Device according to claim 1, **characterised in that** an output device (2) is provided upstream from the feed unit (4) and provides the packaged items (14) individually and in at least one row perpendicular to the conveying direction of the feed unit (4).

3. Device according to either claim 1 or claim 2, **characterised in that** the feed unit (4) comprises at least one peripheral vacuum belt (10) comprising a plurality of mutually spaced vacuum points.

4. Device according to claim 3, **characterised in that** the feed unit (4) comprises a plurality of vacuum grippers (8) for receiving the packaged items (14) and for transferring them to the at least one vacuum belt (10).

5. Device according to either claim 3 or claim 4, **characterised in that** the feed unit (4) comprises at least three combinations of one stopper (22) and one kicker (24), each combination being allocated to one line (16, 18, 20) and the active combinations of different lines (16, 18, 20) being mutually offset in the conveying direction of the feed unit (4).

6. Device according to claim 5, **characterised in that** the feed unit (4) comprises vacuum holes.

7. Device according to any one of the preceding claims, **characterised in that** one of the deposit lines (30) of the transfer station (6) comprises lower deposit surfaces (34) than the at least two deposit lines (28, 32), the deposit line (30), together with the lower deposit surfaces (34), forming the deposit line (30) for the displaced packaged items (14).

8. Device according to any one of the preceding claims, **characterised in that** a servomotor (40) is provided for driving the pusher (38) in a controlled manner.

9. Device according to any one of the preceding claims, **characterised in that**, in a deposit line (30) of the transfer station which forms the deposit line (30) for the displaced packaged items (14), the deposit surfaces (34) comprise flaps (42) which open in the direction of said deposit surfaces.

10. Device according to claim 9, **characterised in that** each deposit surface (34) comprises two flaps which open in opposite directions in the direction of the narrower sides of the deposit surfaces (34).

11. Device according to either claim 9 or claim 10, **characterised in that** a servomotor (44) is provided for driving all of the flaps (42) in a controlled manner.

12. Device according to any one of the preceding claims, **characterised in that** the pusher (38) is formed in such a way as to displace the packaged items (14) in the direction of a central deposit line (30) from two sides simultaneously.

13. Device according to any one of the preceding claims, **characterised in that** the transfer station (6) comprises pivotable retention members (36) for the packaged items (14) in the region of the deposit surfaces (34).

14. Method for transferring packaged items to a packaged item transport system or to a storage device, comprising the following steps:
- receiving and conveying a plurality of packaged items (14) by means of a feed unit (4);
- providing the packaged items (14) through the feed unit (4) in parallel lines (16, 18, 20), but mutually offset in the individual lines (16, 18, 20); and
- delivering the packaged items (14) provided by the feed unit (4) to a stationary transfer station (6) for forming parallel deposit lines (28, 30, 32) of mutually offset packaged items (14);
- displacing the packaged items (14), which are mutually offset in the transfer station (6) in the parallel deposit lines (28, 30, 32), in the direction of a deposit line (30) by means of a pusher;
**characterised in that** the feed unit (4) provides the packaged items (14) in at least three parallel lines (16, 18, 20) and the transfer station (6) comprises at least three parallel deposit lines (28, 30, 32).

## Revendications

1. Dispositif de transfert de produits d'emballage sur un système de transport de produits ou sur un dispositif de stockage, comprenant
une unité d'alimentation (4) pour recevoir et transporter plusieurs produits d'emballage (14), l'unité d'alimentation (4) se prêtant à fournir les produits d'emballage (14) à l'extrémité de la section de transport de l'unité d'alimentation (4) dans au moins deux lignes parallèles (16, 18, 20), mais en déport mutuel entre les lignes individuelles (16, 18, 20) ;
au moins une coulisse (38) pour le déplacement des produits d'emballage (14) fournis par l'unité d'alimentation (4) ; et
un poste de transfert stationnaire (6), qui sert à l'entreposage temporaire des produits d'emballage (14) et au transfert des produits (14) sur le système de transport des produits d'emballage ou sur le dispositif de stockage, le poste de transfert (6) présentant des lignes de dépose parallèles (28, 30, 32) avec des surfaces de dépose (34) pour recevoir les produits d'emballage (14) fournis par l'unité d'alimentation (4), et au moins une coulisse (38) étant disposée dans la zone du poste de transfert (6) et servant au déplacement des produits d'emballage (14), disposés dans cette zone en déport mutuel dans les lignes de dépose parallèles (28, 30, 32), en direction d'une ligne de dépose (30),
**caractérisé en ce que**
l'unité d'alimentation (4) se prête à fournir les produits d'emballage (14) dans au moins trois lignes parallèles (16, 18, 20), et le poste de transfert (6) présente au moins trois lignes de dépose (28, 30, 32) parallèles.

2. Dispositif suivant la revendication 1, **caractérisé en ce qu'**un dispositif de distribution (2) est prévu en amont de l'unité d'alimentation (4), lequel dispositif fournit séparément les produits d'emballage (14) et en au moins une rangée perpendiculairement à la direction de transport de l'unité d'alimentation (4).

3. Dispositif suivant l'une des revendications 1 et 2, **caractérisé en ce que** l'unité d'alimentation (4) présente au moins une bande aspirante (10) rotative avec plusieurs points d'aspiration disposés à distance les uns des autres.

4. Dispositif suivant la revendication 3, **caractérisé en ce que** l'unité d'alimentation (4) présente plusieurs pinces aspirantes (8) pour recevoir les produits d'emballage (14) et les transférer sur la au moins une bande aspirante (10).

5. Dispositif suivant l'une des revendications 3 et 4, **caractérisé en ce que** l'unité d'alimentation (4) présente au moins trois combinaisons de respectivement un arrêt (22) et un éjecteur (24), chaque combinaison étant impartie à une ligne (16, 18, 20) et les combinaisons respectivement actives de différentes lignes (16, 18, 20) étant disposées en déport mutuel dans la direction de transport de l'unité d'alimentation (4).

6. Dispositif suivant la revendication 5, **caractérisé en ce que** l'unité d'alimentation (4) présente des trous d'aspiration.

7. Dispositif suivant l'une des revendications précédentes, **caractérisé en ce que** l'une des lignes de dépose (30) du poste de transfert (6) présente des surfaces de dépose (34) plus profondes que les au moins deux lignes de dépose (28, 32), la ligne de dépose (30) avec les surfaces de dépose (34) plus profondes formant la ligne de dépose (30) pour les produits d'emballage (14) déplacés.

8. Dispositif suivant l'une des revendications précédentes, **caractérisé en ce qu'**un servomoteur (40) est prévu pour l'entraînement contrôlé de la coulisse (38).

9. Dispositif suivant l'une des revendications précédentes, **caractérisé en ce que** les surfaces de dépose (34) présentent des volets (42) d'ouverture dans une ligne de dépose (30) du poste de transfert, qui forme la ligne de dépose (30) pour les produits d'emballage (14) déplacés.

10. Dispositif suivant la revendication 9, **caractérisé en ce que** chaque surface de dépose (34) présente deux volets (42), qui s'ouvrent en sens contraire en direction des côtés les plus étroits de la surface de dépose (34).

11. Dispositif suivant l'une des revendications 9 et 10, **caractérisé en ce qu'**il est prévu un servomoteur (44), qui sert à l'entraînement contrôlé de tous les volets (42).

12. Dispositif suivant l'une des revendications précédentes, **caractérisé en ce que** la coulisse (38) est configurée de telle sorte qu'elle déplace les produits d'emballage (14) simultanément de deux côtés en direction d'une ligne de dépose centrale (30).

13. Dispositif suivant l'une des revendications précédentes, **caractérisé en ce que** le poste de transfert (6) présente des éléments de retenue (36), pivotants dans la zone des surfaces de dépose (34), pour les produits d'emballage (14).

14. Procédé de transfert de produits d'emballage sur un système de transport de produits ou sur un dispositif de stockage, comprenant les étapes suivantes :
- réception et transport de plusieurs produits d'emballage (14) au moyen d'une unité d'alimentation (4) ;
- fourniture des produits d'emballage (14) par l'unité d'alimentation (4) dans des lignes parallèles (16, 18, 20), mais en déport mutuel entre les lignes individuelles (16, 18, 20) ; et
- distribution des produits d'emballage (14), fournis par l'unité d'alimentation (4), sur un poste de transfert stationnaire (6) pour la formation de lignes de dépose parallèles (28, 30, 32) de produits d'emballage (14) disposés en déport mutuel ;
- déglacement des produits d'emballage (14), disposés en déport mutuel dans le poste de transfert (6), dans les lignes de dépose parallèles (28, 30, 32), en direction d'une ligne de dépose (30) au moyen d'une coulisse ;
**caractérisé en ce que**
l'unité d'alimentation (4) fournit les produits d'emballage (14) dans au moins trois lignes parallèles (16, 18, 20) et le poste de transfert (6) présente au moins trois lignes de dépose parallèles (28, 30, 32).
